# EUROPEAN PATENT APPLICATION

(11) **EP 2 455 764 A1**
(43) Date of publication of application: **23.05.2012**
(21) Application number: 10191663.3
(22) Date of filing: 18.11.2010
(51) Int. Cl.: G01N 35/10, B01L 3/02

(54) **Diagnostic apparatus for organic samples analysis**

(71) Applicant: BTP TECNO S.r.l., 84091 Battipaglia (Salerno) (IT)
(72) Inventor: Becchi, Francesco, 16163 Genova (IT); Levaro, Mauro, 16163 Genova (IT)
(74) Representative: Lunati & Mazzoni S.r.L.

(57) **Abstract**

It is provided a diagnostic apparatus (1) for organic-sample analyses, the analyses being of the ELISA type, the apparatus (1) comprising a fluid sucking and ejecting device (2) adapted to enable suction and inner storage or ejection to the outside of said fluid, a feeding needle (3) that can be secured to said sucking device (2) comprising an inner channel for passage of said fluids and adapted to be inserted into containers for intaking or ejecting a given amount of said fluid, actuating means (4) comprising a carriage (12) and adapted to spatially move said carriage (12) along three axes, the carriage being susceptible of connection with said sucking and ejecting device (2), a first replacement station (61) adapted to house a plurality of feeding needles of the disposable type (3a) and suitable to enable automatic fastening and removal of one of said disposable feeding needles (3a) to and from said sucking device (2) connected to said carriage (12), and a second replacement station (7) adapted to allow automatic fastening and removal of a precision feeding needle (3b) to and from the carriage (12).

## Description

The present invention relates to a diagnostic apparatus for organic-sample analyses, in particular for analyses of the ELISA type or the like, as pointed out in the preamble of the first claim.

Presently known are different types of medical analyses such as in particular the analyses of the ELISA type. They are generally carried out on transparent plates including a plurality of wells or small vessels for liquids or solids. Inside the wells the so-called substrates are disposed which consist of antibodies or the like, for example.

The substrates are subsequently filled with predetermined amounts of organic samples such as in particular blood, serum or others. If the organic samples contain a precise antigen, the antigen links up with the antibody present in the substrate. In addition, the presence of said antigen is an indication of the presence of a disease in the subject from which the organic sample has been drawn.

Subsequently, during the analyses, one or more reactants are superimposed such as again antibodies or various enzymes, they too in precisely predetermined amounts. They possibly link up with the antigen therein present.

The last mentioned reactants are in addition adapted to display the presence of the antigen and therefore the disease or the like, in particular through chromatic variations in the substance present in the well.

Said substances are then introduced into wells in said order and subsequently they are left for a period of time in specific incubation regions, so as to enable chemical reactions to be developed. Afterwards the chemical reaction residues are washed away from the wells and finally the colorimetric analysis of the wells is carried out.

Other types of tests follow modes that are very similar to the ELISA tests. The ELISA tests are very reliable and frequently carried out on many samples belonging to different subjects.

Due to this necessity to make a great number of analyses, diagnostic apparatuses capable of automatically obtaining a great number of analyses of the ELISA type or the like have been accomplished.

The same apparatuses are therefore adapted to carry out the steps of introducing the organic sample into the wells already provided with a substrate and introducing the reactants into the wells including the substrate and the sample. They are also adapted to transfer the plates into the incubation regions and the like and wash the wells and carry out the colorimetric analysis of the wells for verifying the result.

Said apparatuses therefore comprise modules including said wells, first containers with the organic samples to be examined and second containers with the reactants for the analyses.

The same apparatuses further include means for drawing the liquids from the different containers and depositing them into the wells and means for the colorimetric analysis of the chemiluminescence type or the like, consisting of photodiodes.

Said drawing and depositing means comprises a suction and deposit device and a drawing needle adapted to be introduced into the containers. Said needle is generally of two types: a disposable needle or a precision needle.

The disposable drawing needles are generally of simpler use, as they do not require washing, but are also less precise because they must be cheap and are generally of polymeric material.

By contrast, the precision drawing needles are generally of metal and are more precise but of slower use, because they require a suitable washing after each operation.

Consequently, for more important analyses or for delicate internal steps of an analysis, precision needles are generally used, while for less important analyses or for steps requiring less accuracy and in addition for avoiding pollution of the samples with each other, of the reactants with each other and other possible exchanges, disposable needles are used.

Therefore, the diagnostic apparatuses generally have at least one first arm spatially translatable and adapted to support an interchangeable disposable needle and a second spatially translatable arm which is adapted to support a metallic precision needle.

The diagnostic apparatuses also comprise means for handling the modules. They further comprise colorimetric-analysis means adapted to analyse the individual wells.

The known art mentioned above has some important drawbacks.

In fact, said diagnostic apparatus are very complicated and expensive and therefore cannot be used in small laboratories.

Under this situation the technical task underlying the present invention is to conceive a diagnostic apparatus for organic-sample analyses capable of substantially obviating the mentioned drawbacks.

Within the scope of this technical task it is an important aim of the invention to obtain a diagnostic apparatus for organic-sample analyses that is simple, quick and cheap.

The technical task mentioned and the aims specified are achieved by an apparatus for medical analyses of organic samples as claimed in the appended claim 1.

Preferred embodiments are highlighted in the sub-claims.

The features and advantages of the invention are hereinafter clarified by the detailed description of a preferred embodiment of the invention, with reference to the accompanying drawings, in which:

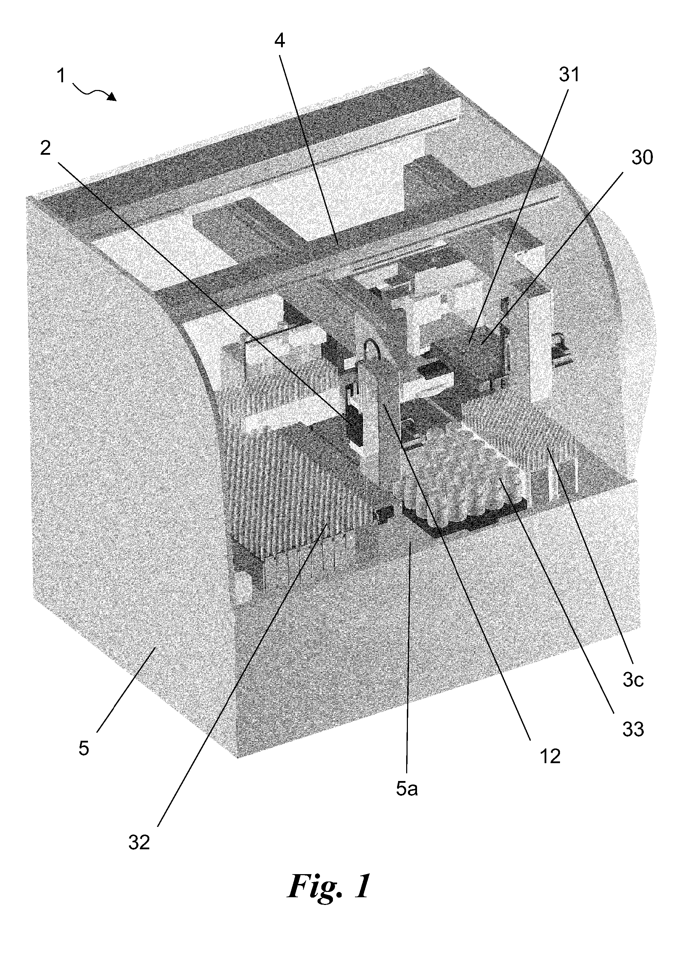

**Fig. 1** shows a first overall view of the apparatus of the invention;

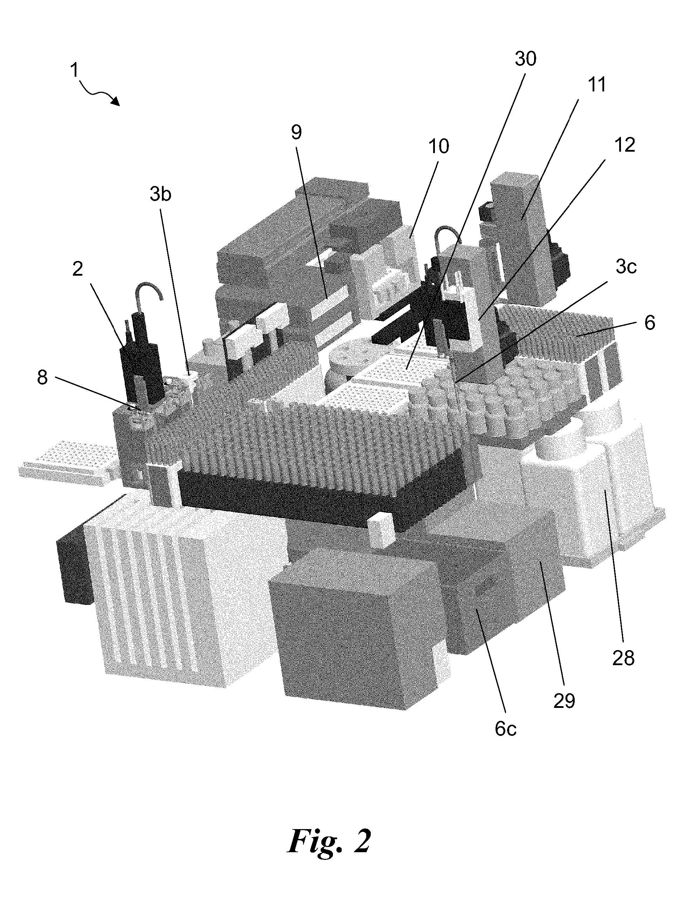

**Fig. 2** shows a second overall view of the apparatus with a supporting structure and rails not visible;
**Fig. 3** highlights a first detail of the apparatus;
**Fig. 4a** shows a second detail of the apparatus;
**Fig. 4b** shows a detail of Fig. 1;
**Fig. 5a** shows a third detail of the apparatus in a first configuration during a hooking procedure;
**Fig. 5b** is a detail of the apparatus in Fig. 5a in a second configuration during a hooking procedure;
**Fig. 5c** reproduces the detail of the apparatus in Fig. 5a in a third configuration during a hooking procedure;
**Fig. 5d** is a detail of the apparatus in Fig. 5a in a fourth configuration during a hooking procedure;
**Fig. 6a** shows a fourth detail of the apparatus in a first configuration during a release procedure;
**Fig. 6b** is the detail of the apparatus in Fig. 6a in a second configuration during a release procedure;
**Fig. 6c** shows the detail of the apparatus in Fig. 6a in a third configuration during a release procedure;
**Fig. 6d** represents the detail of the apparatus in Fig. 6a in a fourth configuration during a release procedure;
**Fig. 6e** is the detail of the apparatus in Fig. 6a in a fifth configuration during a release procedure;
**Fig. 7a** reproduces a further detail of the apparatus in a first configuration;
**Fig. 7b** represents a further detail of the apparatus in a second configuration;

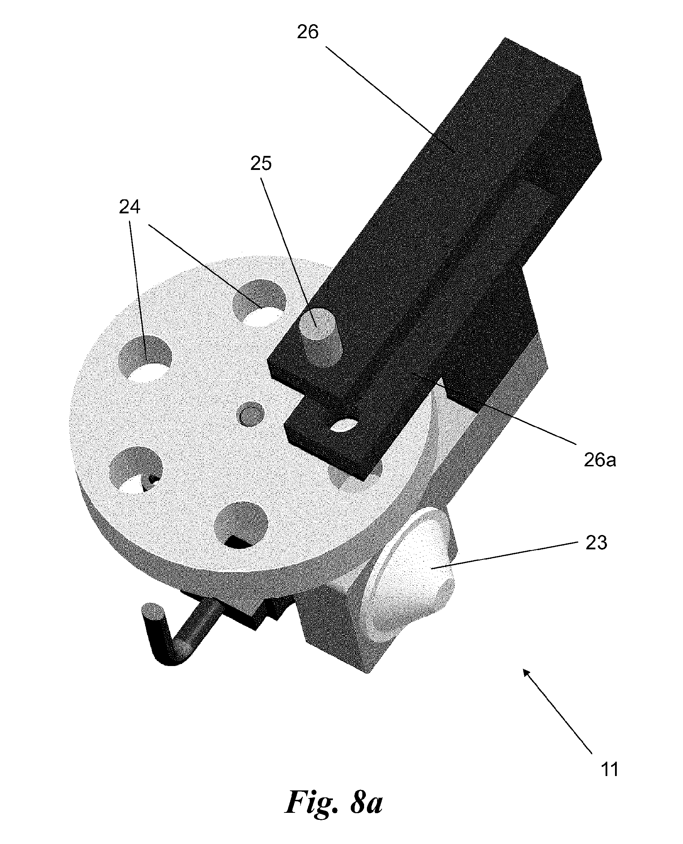

**Fig. 8a** represents another detail of the apparatus in a first configuration;

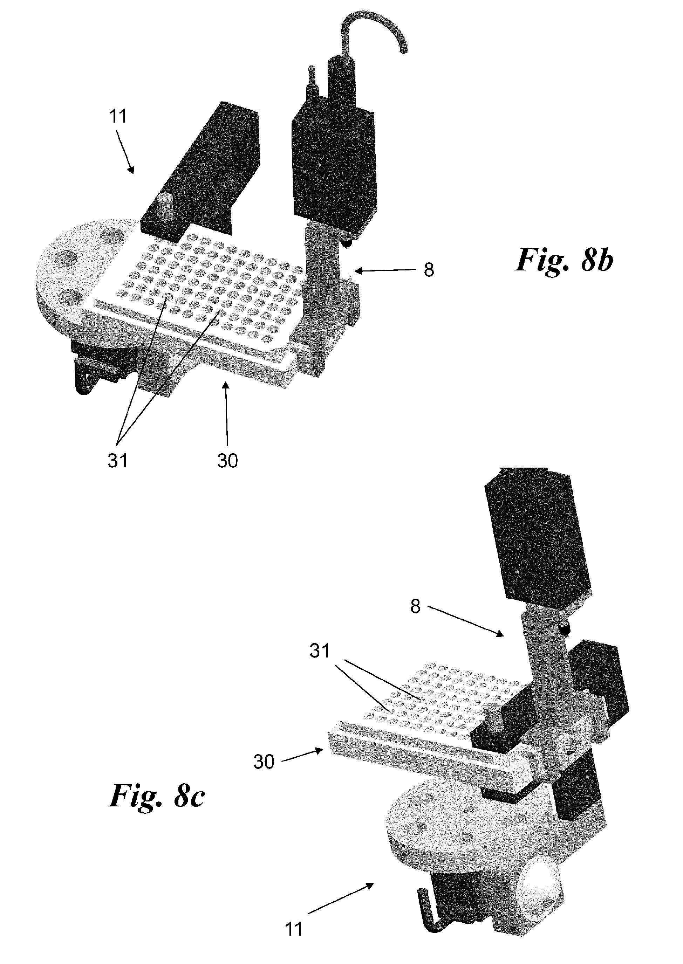

**Fig. 8b** is another detail of the apparatus in a second configuration;
**Fig. 8c** shows another detail of the apparatus in a third configuration.

With reference to the drawings, the apparatus in accordance with the invention is generally identified with reference numeral **1.**

It is adapted to carry out analyses in which organic samples are caused to react together with reactants suitable to highlight the presence of given substances, in particular in order to carry out a medical diagnosis. Said analyses are preferably of the previously described ELISA type.

Apparatus 1 in short comprises a supporting structure **5** including a work surface **5a** suitable to support a fluid sucking and ejecting device **2** adapted to enable suction and inner storage or ejection to the outside of fluids; a feeding needle **3** that can be secured to the sucking device 2, which comprises an inner channel for fluid passage and is adapted to be introduced into containers for drawing in or ejecting a given amount of fluid; actuating means **4** for the sucking and ejecting device 2; a first and a second station **6** and **7,** adapted to allow one of said feeding needles 3 of either the disposable **3a** or the precision **3b** type to be automatically secured and removed, as hereinafter specified.

Apparatus 1 further comprises a handling clamp **8,** incubation places **9,** washing means **10** for several portions of apparatus 1, a colorimetric analysis device **11** for the organic samples.

In greater detail, the fluid sucking device 2 comprises fluid sucking and ejecting means, consisting of an inner pump or a connection with an outer pump; a fluid-storage chamber adapted to temporarily contain fluid; and two extendible arms **2c** adapted to remain in contact with the central body against the action of elastic elements and having a locating tooth **2d** at the end portion thereof and a slidable element **2e.** The sucking and ejecting device 2 can be connected to and released from disposable feeding needles 3a. Said needles are preferably of polymeric material. The connection takes place through interference fit, in a direction substantially perpendicular to the work surface 5a, between the disposable needle 3a and an attachment element **2b** comprising a fluid-tight seal **2f** present in device 2.

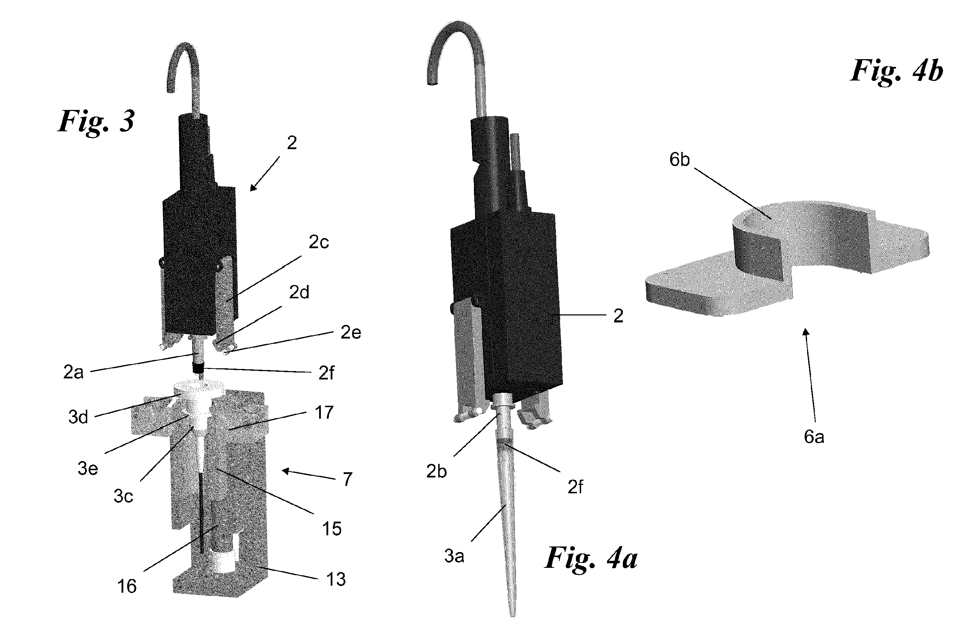

Release of the device on the contrary takes place at a first release support **6a** being part of the first station 6. The release support 6a, shown in Fig. 4, is known by itself and comprises a portion provided with a semi-cylindrical cavity **6b.** It is adapted to enable introduction of the attachment element 2b thereinto, through a movement parallel to surface 5a and retention of the mouthpiece of the disposable needle 3a through a movement perpendicular to surface 5a in a direction away therefrom.

The sucking and ejecting device 2 is connected to the actuating means 4 including a carriage **12.** In detail, the actuating means 4 is adapted to move carriage 12 along three spatial directions, preferably perpendicular to each other and therefore said means suitably comprises three perpendicular guides, three carriages and three motors.

Carriage 12 can then be indirectly secured both to a disposable needle 3a and to a precision needle 3b of metal material.

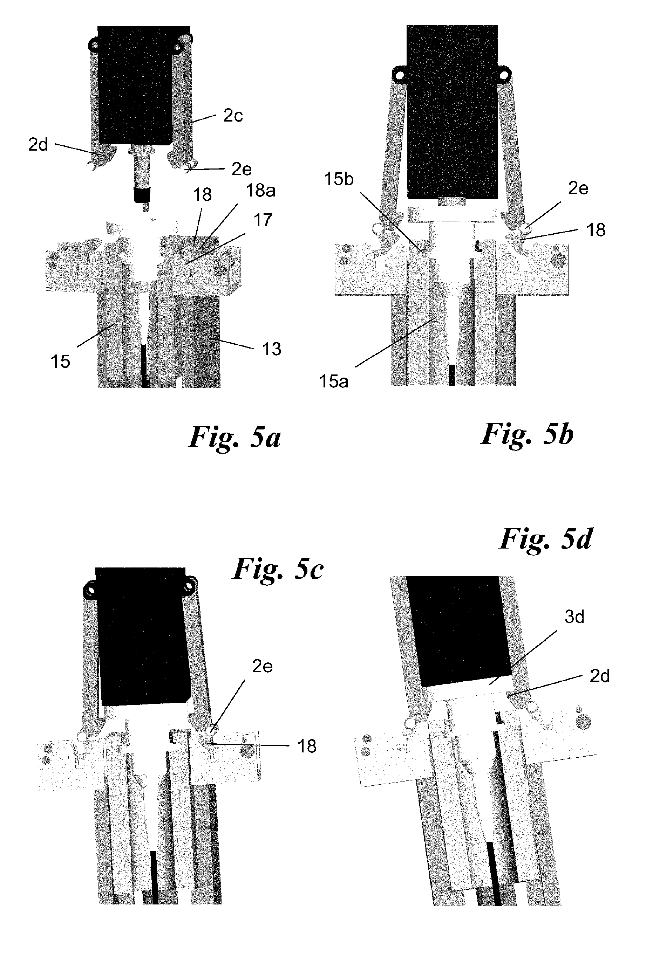

Fastening to the precision needle 3b preferably takes place through fastening of the precision needle 3b itself to the sucking and ejecting device 2, which can be also connected to said disposable needles 3a or, alternatively, through fastening of carriage 12 to a different device 2 provided with the precision needle 3b. Automatic fastening and removal of the precision feeding needle 3a to and from carriage 12 takes place through the second replacement station 7 and the particular flange **3c** of the precision needle, shown for example in Figs. 5a-6e.

In particular, flange 3c comprises a grip collar **3d** placed at the needle end and of a disc-shaped conformation, and an abutment collar **3e** placed a short distance therefrom and defining a disc-shaped element projecting from the adjacent portions of flange 3c. Said flange 3c is suitable for coupling with the attachment element 2b thus forming a fluid-tight sealing with seal 2f or a different sealing means such as a suitable O-ring.

The second replacement station 7, instead, comprises a supporting body **13** carrying a slidable body **15** against the action of an elastic element **16,** a double cam **17** adapted to interact with arms 2c, and engagement elements **18,** placed close to cams 17.

In more detail, the slidable body 15 has a semi-cylindrical seat **15a** adapted to enable introduction of needle 3b in a lateral direction, i.e. a direction parallel to surface 5a, and comprising an annular seat **15b** substantially conforming in shape to the abutment collar and having an inner diameter greater than the diameter of the adjacent portions.

The elastic element 16 supports the slidable body and keeps it at a distance from the work surface 5a.

The double cam 17 is placed at two opposite ends of the slidable body 15 and is adapted to interact with the slidable elements 2e of the extendible arms 2c and to open said arms when the sucking and ejecting device 2 is pressed downwards. Finally, the engagement elements 18 too constitute cams for opening of arms 2c, which elements are movable around a rotation axis **18a** and retained by elastic means with their inner ends facing upwards if they are not submitted to forces in the opposite direction. These arms 2c further comprise an inner seat **18b** for the slidable elements 2e.

The second station finally comprises a washing well (not shown and known by itself) for washing the precision needle 3b.

The handling clamp 8 comprises a concave seat **8a** adapted to house and move plates or various elements for the analyses. It is further spatially movable close to the work surface 5a. In particular, clamp 8 is preferably movable for possible connection with carriage 12 which is adapted to be also hooked to devices 2 connected with needles 3. In addition, the connection suitably also occurs with the sucking and ejecting device 2.

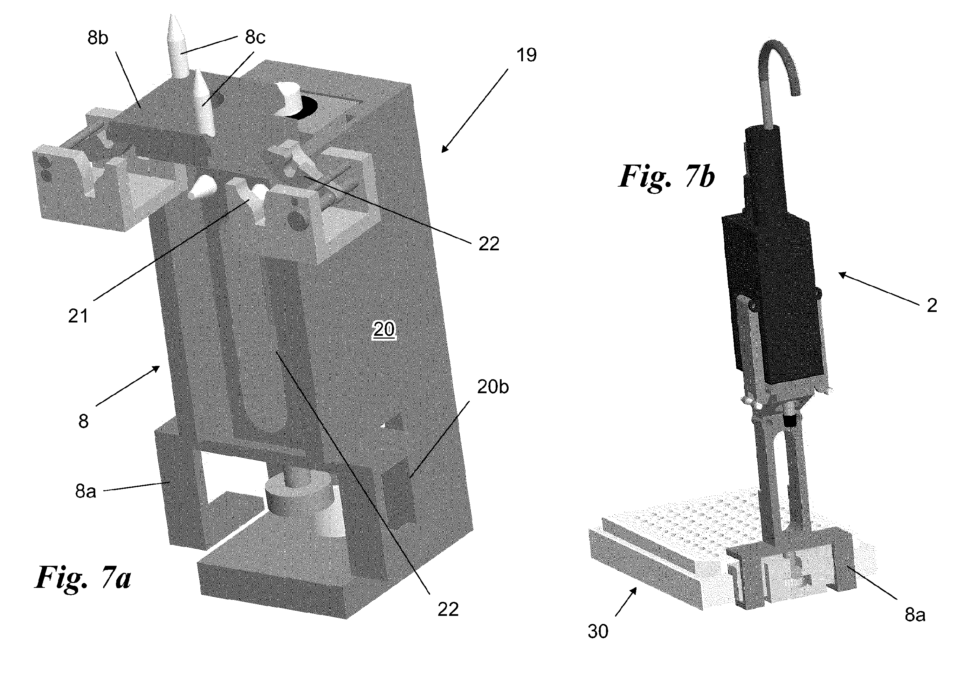

Connection between clamp 8 and carriage 12 preferably takes place in the same manner as connection between the precision needle 2b and device 2, as shown in Figs. 7a-7b. In fact, clamp 8 is provided with a grip member **8b** similar to the grip collar 3d, and with an abutment element consisting of the same concave seat 8a and performing the same function as the abutment collar 3e.

Apparatus 1 also comprises a third station **19,** adapted to allow introduction and removal of clamp 8 into and from carriage 12 and similar to the second station 7. The third station 19 in fact comprises a support body **20,** a second double cam **21,** adapted to interact with arms 2c, and second engagement elements **22,** placed close to the second cams 21.

In greater detail, the support body 20 comprises a second semi-cylindrical seat **20a** adapted to enable introduction of clamp 8 in a direction parallel to the work surface 5a and having a concave seat **20b** substantially conforming in shape to the concave seat 8a.

The second double cam 21 and second engagement elements 22 are substantially identical with the double cam 17 and the engagement elements 18. Clamp 8 comprises an attachment element **8c,** preferably consisting of two plugs for further securing device 2 or carriage 12 to clamp 8.

Then, carriage 12 can be connected to washing means 10 known by themselves. Finally, the device for the colorimetric analysis 11 comprises a bearing body **26** for the device itself, a lamp **23,** a plurality of filters **24** and a receiver **25.**

In more detail, the lamp 23 consists of a LED or a light emitting photodiode.

The light emitted is further preferably immediately filtered by a filter 24 that can be preferably selected for example through automatic rotation of a wheel at the periphery of which filters 24 are placed.

After filter 24, in the trajectory covered by the light emitted by lamp 23, there is a seat **26a** being part of the bearing body 26, in which a sample under analysis can be positioned. The seat 26a is further adapted to enable movement of a plate including samples handled by clamp 8, without hindering it.

After seat 26a, there is the receiver 25 adapted to analyse the sample colour and transmit it to a possible computer or the like. The receiver 25 consists of a photodiode or the like.

The receiver 25 is preferably only one, but, alternatively, some units thereof can be also present although suitably in a limited number.

Apparatus 1 finally comprises a container **6c** for the already used disposable needles 2a, part of the first station 6, a pump (not shown) for the different devices, in particular the washing means, seats for storage of the washing liquids **28** and a container for liquid removal **29.** The last-mentioned elements are preferably placed under the work surface 5a.

Operation of the diagnostic apparatus 1, described above as regards its structure is the following.

Plates **30** are preferably positioned on the work surface 5a, which plates include first containers or wells **31,** each adapted to hold a different sample of liquid to be examined.

Also present are second containers **32** or specimens containing liquid organic samples to be analysed, such as in particular blood or serum and finally third containers **33** including reactants for performing the analyses.

Also positioned are a series of disposable needles 3a in the first station 6, the precision needle 3b in the second station 7, and clamp 8 in the third station 10. The sucking and ejecting device 2 is then moved between the containers 31, 32 and 33 to transfer the liquids and carry out the analyses. In particular liquid admission or suction takes place through a needle 3.

The device 1 then hooks a suitable needle 3.

In particular, for hooking or discarding a disposable needle 3a, the sucking and ejecting device 2 makes use of the release support 6a (Fig. 4) and is substantially moved according to the known art.

In a different manner, for hooking the precision needle 3b placed in the second replacement station, device 2 moves as shown in Figs. 5a-5d. In particular, the sucking and ejecting device 2 moves close to the slidable body 15 including the precision needle 3b.

In its moving close from top to bottom, in a direction substantially perpendicular to the work surface 5a (Fig. 5a), device 2, and in particular the slidable element 2e of arms 2c, meets the engagement elements 18 constituting an inclined chute adapted to open arms 2c when the device 2 is actuated towards the surface 5a. As a result of contact with the engagement elements 18, arms 2c open (Fig. 5b) overcoming the force of the elastic elements maintaining them in a closed condition, in such a manner that teeth 2d go round the grip collar 3d. Then the engagement elements 18 too, pushed by arms 2c, rotate about axis 18a against the action of their elastic elements (Fig. 5c).

The device including needle 3b is finally laterally slipped off by means of movements parallel to surface 5a.

After said rotation, the engagement elements 18 do not constitute an inclined surface any longer and do not counteract closure of arms 2c any longer, so that said arms are closed and, through teeth 2d, grasp the grip collar 3d and consequently needle 3b.

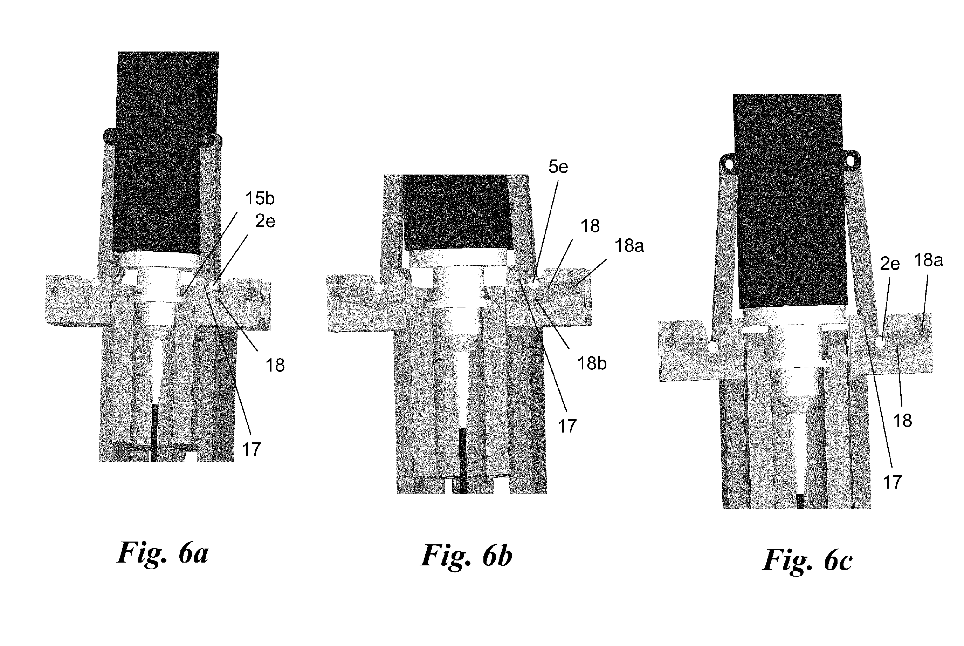

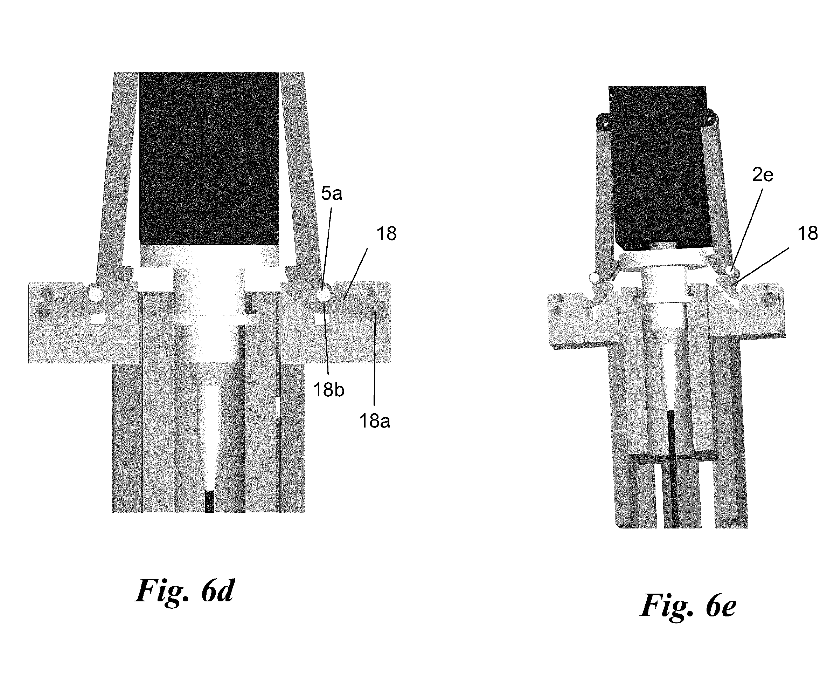

To release the precision needle 3b and replace it, for instance with a disposable needle 3a, the following procedure as shown in Figs. 6a-6e is followed.

Needle 3b is laterally inserted by means of movements parallel to surface 5a, into the semi-cylindrical seat 15a of the slidable body 15, until collar 3e is inserted in the annular seat 15b and retained therein in a direction perpendicular to surface 5a (Fig. 6a).

The device including needle 3b moves vertically pushing the slidable element 15 downwards. By this movement, the engagement elements 18 are fully rotated downwards and arms 2c are opened by interference of the slidable element 2e with cams 17 (Fig. 6b).

Finally, the slidable elements 2e reach their end of stroke and are also engaged in the inner seats 18b of elements 18 (Fig. 6c).

At this point, the ascent of the sucking and ejecting device 2 starts. Once the slidable element 15 pushed upwards by the counter-spring has reached its end-of-stroke position, needle 3b if not engaged by arms 2c, does not follow device 2 due to the upper limit of seat 15a. In addition, during said ascent, the engagement elements 18 maintain arms 2c separated (Fig. 6d) in such a manner that the engagement teeth 6d do not grasp the grip collar 3d.

Therefore the sucking and ejecting device 2 remains clear of the precision needle 3b.

Afterwards, the sucking and ejecting device 2 can grasp clamp 8 and release the same through procedures similar to those shown for needle 3b.

Clamp 8 can then carry out transport in particular of plates 30 for the colorimetric analyses for example, through an innovative method.

In fact, in this analysis taking place by means of the described device 11, the latter is provided to remain fixed relative to structure 5 and the plate is provided to be moved by clamp 8 so as to exhibit one reading at a time. It is also possible, as shown, to provide a suitable arm with clamp 8.

The other operating steps are substantially known by themselves and can be carried out following the modes for the ELISA tests, for example.

Apparatus 1 also implements an innovative process for carrying out diagnoses of organic samples.

This process contemplates a step of at least partly automatically arranging organic samples and a plurality of reactants in containers 31; a step of carrying out an analysis of the containers 31 after possible chemical reactions executed through a colorimetric analysis device 11 for fluids present in the containers 31 that are disposed in a given position relative to the analysis device 11. Said analysis step comprises automatic handling of said plurality of containers 31 and arrangement of at least one specified container 31 to a given position.

This process is preferably carried out through the previously described apparatus 1 following the disclosed operating modes.

The invention achieves important advantages.

In fact, due to the described solutions it is possible to have a single carriage 12 and therefore single actuating means 4 enabling use of both disposable needles 3a and precision needles 3b.

In addition, by use of a single carriage 12 it is also possible to actuate a clamp 8 and even carry out the colorimetric analyses.

The innovative process in fact allows a single reader, or reading photodiode, to be present.

The invention is susceptible of variations falling within the scope of the inventive idea expressed in the independent claims. In particular, the diagnostic apparatus 1 can comprise several arms at least one of which is multipurpose, like the arm shown in the accompanying drawings. All of the details can be replaced by equivalent elements and the materials, shapes and sizes can be of any nature and magnitude.

## Claims

1. A diagnostic apparatus (1) for organic-sample analyses, in which fluid organic samples are introduced and allowed to react together with reactants adapted to bring out and emphasise the presence of given substances within said organic samples, said diagnostic apparatus (1) comprising a fluid sucking and ejecting device (2) adapted to enable suction and inner storage or ejection to the outside of said fluid, a feeding needle (3) that can be secured to said sucking and ejecting device (2), which comprises an inner channel for passage of said fluids and is adapted to be inserted into said containers for intaking or ejecting a given amount of said fluid, actuating means (4) comprising a carriage (12) and adapted to spatially move said carriage (12) along three axes, said carriage being susceptible of connection with said sucking and ejecting device (2), **characterised in that** it comprises a first replacement station (6) adapted to house a plurality of feeding needles of the disposable type (3a) and suitable to enable automatic fastening and removal of one of said disposable feeding needles (3a) to and from said sucking and ejecting device (2) connected to said carriage (12), and a second replacement station (7) adapted to allow automatic fastening and removal of a precision feeding needle (3b) to and from said carriage (12).

2. A diagnostic apparatus as claimed in claim 1, wherein said second replacement station (7) is adapted to enable automatic fastening and removal of a sucking and ejecting device (2) connected to a precision feeding needle (3b) to and from said carriage (12).

3. A diagnostic apparatus as claimed in claim 2, wherein said precision feeding needle (3b) comprises a flange (3c), and wherein said sucking and ejecting device (2) comprises an attachment element (2b) and extendible arms (2c) adapted to grasp said flange (3c) at said second replacement station (7).

4. A diagnostic apparatus as claimed in claim 3, wherein said second replacement station (7) comprises a body (15) including a semi-cylindrical seat (15a) adapted to enable introduction of said precision needle (3b) in a lateral direction and to interact with said flange (3c) in a vertical direction, and a double cam (17) adapted to interact with said arms (2c), as well as engagement elements (18) placed in the vicinity of the cams (17).

5. A diagnostic apparatus as claimed in one or more of the preceding claims, comprising a handling clamp (8) adapted to move a plurality of containers (31) suitable for holding fluid substances for carrying out said analyses and wherein said handling clamp (8) is susceptible of connection with said carriage (12).

6. A diagnostic apparatus as claimed in the preceding claim, comprising a colorimetric analysis device (11) for the fluids present in at least one container (31) disposed in a given position relative to said analysis system (11) and wherein said handling clamp (8) is suitable to move a plurality of containers (31) in a manner adapted to dispose at least one specified container in said given position.

7. A diagnostic apparatus as claimed in the preceding claim, wherein said colorimetric analysis system (11) comprises a bearing body (26) for the device itself, a lamp (23) and only one receiver (25) adapted to read all containers (31) by means of said handling clamp (8).

8. A diagnostic apparatus as claimed in the preceding claim, wherein said colorimetric analysis system (11) comprises a plurality of filters (24) adapted to filter the light from said lamp (23).

9. A diagnostic apparatus as claimed in one or more of the preceding claims, adapted to carry out a diagnosis of the ELISA type.

10. A process for carrying out diagnoses of organic samples comprising: a step of at least partly automatically arranging said organic samples and a plurality of reactants in a plurality of containers (31, 32, 33); a step of carrying out an analysis of said containers 31 after possible chemical reactions, said analysis being carried out through a colorimetric analysis device (11) for fluids present in at least one of said containers (31) disposed in a given position relative to the analysis device (11), **characterised in that** said analysis step comprises automatic handling of said plurality of containers (31) and arrangement of at least one specified container (31) in said given position.

11. A process as claimed in the preceding claim consisting of a test of the ELISA type.
